(19) Europäisches Patentamt / European Patent Office / Office européen des brevets

(11) **EP 2 881 591 B1**

(12) # EUROPÄISCHE PATENTSCHRIFT

(45) Veröffentlichungstag und Bekanntmachung des Hinweises auf die Patenterteilung:
**09.09.2020   Patentblatt 2020/37**

(51) Int Cl.:
*F04D 19/04* *(2006.01)*        *F04D 29/66* *(2006.01)*
*F16F 15/32* *(2006.01)*

(21) Anmeldenummer: **14187044.4**

(22) Anmeldetag: **30.09.2014**

(54) **Pumpe und Verfahren zum Wuchten eines Rotors**

Pump and method for balancing a rotor

Pompe et procédé d'équilibrage d'un rotor

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2013   DE 102013113400**

(43) Veröffentlichungstag der Anmeldung:
**10.06.2015   Patentblatt 2015/24**

(73) Patentinhaber: **PFEIFFER VACUUM GMBH**
**35614 Asslar (DE)**

(72) Erfinder: **Mekota, Mirko**
**35630 Ehringshausen (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 1 314 891      CA-A- 621 061**
**GB-A- 2 457 060      US-A- 4 716 761**
**US-A- 4 721 445**

EP 2 881 591 B1

**Beschreibung**

Die vorliegende Erfindung betrifft eine Pumpe gemäß dem Oberbegriff des Anspruchs 1, insbesondere eine Vakuumpumpe, mit einem Rotor sowie ein Verfahren zum Wuchten eines Rotors. Solch eine gattungsgemäße Pumpe ist der Art nach im Wesentlichen beispielsweise aus der US 4 721 445 A1 bekannt.

Eine der Art nach im Wesentlichen vergleichbare Pumpe geht ferner aus der EP 1 314 891 A1 hervor.

Rotoren, die zum Beispiel in einer Vakuumpumpe zum Einsatz kommen, können Unwuchten aufweisen, die den Pumpenbetrieb stören können. Derartige Unwuchten können außerdem ungewünschte Vibrationen hervorrufen und die Lebensdauer der Pumpe oder des Rotors verringern. Unwuchten werden durch Massendefekte hervorgerufen, die bei der Rotorfertigung nicht immer in einem akzeptablen Rahmen gehalten werden können. Daher kann es erforderlich sein, dass ein Rotor ausgewuchtet werden muss, bevor dieser zum Beispiel in eine Pumpe eingebaut wird. Der Rotor läuft dabei umso vibrationsärmer und ist umso langlebiger, je besser er ausgewuchtet ist.

Der Erfindung liegt ausgehend von der US 4 721 445 A1 die Aufgabe zugrunde, eine Pumpe mit einem in verbesserter Weise gewuchteten Rotor sowie ein verbessertes Verfahren zum Wuchten eines Rotors bereitzustellen.

Die Aufgabe wird durch eine Pumpe mit den Merkmalen des Anspruchs 1 beziehungsweise durch ein Verfahren mit den Merkmalen des Anspruchs 14 gelöst. Bevorzugte Ausführungsformen und Weiterbildungen der Erfindung werden in den abhängigen Ansprüchen beschrieben.

Erfindungsgemäß ist eine Spanneinrichtung im Kanal angeordnet. Die Spanneinrichtung ist dabei bevorzugt im Kanal in radialer Richtung gesehen zwischen der Rotationsachse und dem Wuchtgewicht angeordnet. Erfindungsgemäß handelt es sich bei der Spanneinrichtung um ein elastisches Element, wie etwa eine Feder oder ein Elastomer.

Eine erfindungsgemäße Pumpe umfasst einen um eine Rotationsachse drehbaren Rotor, der einen Einstellbereich für wenigstens ein Wuchtgewicht aufweist, wobei in dem Einstellbereich der Abstand des Wuchtgewichts zur Rotationsachse auf einen Zielabstand von einer Mehrzahl von am Rotor vorgesehenen Zielabständen eingestellt ist, und wobei das Wuchtgewicht bei dem eingestellten Zielabstand einen gewünschten Wuchtzustand bewirkt.

Wie eingangs erwähnt wurde, kann eine Unwucht auf einem Massendefekt beruhen. Der Massendefekt kann dabei durch eine punktförmige Masse $m_u$ beschrieben werden. Dabei bewirkt die Unwucht eine Kraft $F_u$

$$F_u = m_u d \omega^2 \ \text{(Formel 1)},$$

wobei d der Abstand des Massendefekts zur Rotationsachse und $\omega$ die Winkelgeschwindigkeit ist, mit der sich der Rotor dreht.

Die durch die Unwucht hervorgerufene Kraft $F_u$ soll möglichst vollständig durch eine von dem Wuchtgewicht hervorgerufene Kompensationskraft kompensiert werden. Ein Wuchtgewicht mit der Masse $m_w$ bewirkt dabei in einem Abstand $r_w$ zur Rotationsache die Kraft $F_w$

$$F_w = m_w r_w \omega^2 \ \text{(Formel 2)}.$$

Setzt man $F_u = F_w$ gemäß den Formeln (1) und (2), so ergibt sich für das Kräftegleichgewicht:

$$F_u = F_w = m_u d = r_w m_w \ \text{(Formel 3)}.$$

Aus Formel (3) folgt, dass ein Wuchtgewicht mit der Masse $m_w$ die durch die Unwucht hervorgerufene Kraft $F_u$ kompensiert, wenn der Abstand $r_w$ des Wuchtgewichts zur Rotationsachse entsprechend eingestellt ist. Der vorliegenden Erfindung liegt nun der Gedanke zugrunde, dass ein Einstellbereich an einem Rotor vorgesehen ist, innerhalb dem der Abstand des Wuchtgewichts zur Rotationsachse verstellbar ist und dass das Wuchtgewicht innerhalb des Einstellbereichs auf denjenigen Zielabstand eingestellt ist, an dem das Wuchtgewicht einen gewünschten Wuchtzustand bewirkt. Dabei entspricht der gewünschte Wuchtzustand insbesondere demjenigen Wuchtzustand, bei dem eine am Rotor ohne das Wuchtgewicht vorhandene Unwucht zumindest annähernd kompensiert wird.

Der Abstand des Wuchtgewichts zur Rotationsachse kann in dem Einstellbereich, insbesondere stufenlos, verstellbar sein. Der Abstand des Wuchtgewichts ist somit durch Bewegen des Wuchtgewichts längs des Einstellbereichs veränderbar. Der Abstand kann daher sehr genau auf den gewünschten Zielabstand eingestellt und dadurch ein gewünschter Wuchtzustand präzise einjustiert werden.

Aus Formel (3) folgt auch, dass durch eine Änderung der Masse $m_w$ des Wuchtgewichts der Wuchtzustand beeinflusst werden kann. Zum Wuchten eines Rotors kann daher folgendermaßen vorgegangen werden: Zunächst wird ein Wuchtgewicht mit einer bestimmten Wuchtmasse aus einem Satz von mehreren Wuchtgewichten unterschiedlicher Masse ausgewählt. Die Auswahl kann dabei so erfolgen, dass der einzustellende Zielabstand für das ausgewählte Wuchtgewicht innerhalb des am Rotor vorgesehenen Einstellbereichs liegt und somit einem der Mehrzahl am Rotor vorgesehenen Zielabständen entspricht. Dann wird das ausgewählte Wuchtgewicht im Einstellbereich angeordnet und der Abstand des Wuchtgewichts zur Rotationsachse wird auf denjenigen Zielabstand eingestellt, bei dem der gewünschte Wuchtzustand bewirkt wird. Durch Bewegen des Wuchtgewichts längs des Einstellbereichs kann der Abstand dabei zwischen verschiedenen Zielabständen verstellt werden.

Das Wuchtgewicht kann bei dem Zielabstand am Rotor, insbesondere an einer Rotorwelle des Rotors, mittels einer Fixierung fixiert sein. Dadurch kann eine Verstellung des Wuchtgewichts, insbesondere während des Rotorbetriebs, vermieden werden. Die Fixierung kann dabei derart ausgestaltet sein, dass diese eine Bewegung des Wuchtgewichts in Richtung der Rotationsachse und/oder von der Rotationsachse weg verhindert.

Das Wuchtgewicht kann auch durch Festkleben bei dem Zielabstand fixiert werden. Dafür eignet sich zum Beispiel ein für Vakuumanwendungen geeigneter Klebstoff.

Das Wuchtgewicht wird durch Verspannen am Zielabstand fixiert. Eine zum Verspannen eingesetzte Spanneinrichtung ist dabei derart ausgebildet, dass diese eine Bewegung des Wuchtgewichts in Richtung der Rotationsachse und/oder von der Rotationsachse weg blockiert. Eine sichere Fixierung des Wuchtgewichts bei dem Zielabstand kann somit erreicht werden.

Erfindungsgemäß ist wenigstens ein Kanal im Rotor, insbesondere in einer Rotorwelle oder in einem Bauteil auf der Rotorwelle, ausgebildet, wobei das Wuchtgewicht in dem Kanal angeordnet ist und sich der Einstellbereich über zumindest einen Teil des Kanals erstreckt. Das Wuchtgewicht kann somit innerhalb des Kanals auf den Zielabstand eingestellt und während des bestimmungsgemäßen Gebrauchs des Rotors sicher im Kanal gehalten werden. Bei dem Bauteil auf der Rotorwelle kann es sich zum Beispiel um wenigstens eine Scheibe handeln, die auf der Rotorwelle sitzt.

Nach einer bevorzugten Weiterbildung der Erfindung ist der Kanal als Gewindebohrung und das Wuchtgewicht ist als wenigstens eine Gewindeschraube ausgebildet. Die Gewindeschraube kann durch Verdrehen stufenlos längs der Gewindebohrung verstellt und somit auf einfache Weise auf den Zielabstand eingestellt werden. Ferner ist vorteilhaft, dass die Gewindeschraube zumindest bis zu einem gewissen Grad von der Gewindebohrung fixiert wird.

Besonders bevorzugt ist die Gewindeschraube als Madenschraube ausgebildet.

Der Kanal ist bevorzugt als Sackloch, insbesondere als Sacklochbohrung, oder als Durchgang, insbesondere als Durchgangsbohrung, ausgestaltet. Der Kanal kann somit besonders einfach realisiert werden.

Der Kanal kann bevorzugt derart ausgebildet sein, dass dieser die Rotationsachse kreuzt. Das Wuchtgewicht kann somit auf einen beliebig kleinen Zielabstand zur Rotationsachse eingestellt werden, so dass auch verhältnismäßig kleine Unwuchten kompensiert werden können.

Durch die Spanneinrichtung kann das Wuchtgewicht im Kanal fixiert werden. Dabei ist es vorteilhaft, wenn der Kanal als Gewindebohrung und das Wuchtgewicht als Gewindeschraube ausgestaltet sind, da die Spanneinrichtung die Gewindeschraube gegen die Gewindebohrung verspannen und somit in ihrer Lage fixieren kann.

Bei einem als Sacklochbohrung ausgebildeten Kanal ist die Spanneinrichtung bevorzugt zwischen dem Wuchtgewicht und dem Sacklochboden angeordnet bzw. eingespannt. Dadurch kann die Spanneinrichtung eine in Richtung der Bohröffnung gerichtete Vorspannkraft auf das Wuchtgewicht ausüben und somit das Wuchtgewicht bei dem eingestellten Zielabstand fixieren.

In einem bevorzugt als Durchgangsbohrung ausgestalteten Kanal kann ein von wenigstens zwei Wuchtschrauben gebildetes Wuchtgewicht sicher fixiert werden, wenn die beiden Wuchtschrauben derart in den Kanal eingeschraubt und gegeneinander angezogen sind, dass das Wuchtgewicht dem Zielabstand entsprechend von der Rotationsachse beabstandet ist. Die Wuchtschrauben können unmittelbar gegeneinander angezogen sein.

Erfindungsgemäß erfolgt das Gegeneinanderanziehen der Wuchtschrauben mittelbar, wobei ein Spannelement und/oder ein elastisches Element, insbesondere eine Feder, zwischen den beiden Wuchtschrauben angeordnet Vorteilhaft daran ist, dass die Wuchtschrauben gegen das Spannelement bzw. das elastische Element angezogen werden können. Dabei drückt das Spannelement bzw. das elastische Element gegen die Wuchtschrauben, wodurch die Wuchtschrauben jeweils gegen das Gewinde verspannt und somit bei ihrem jeweiligen Zielabstand fixiert werden.

Nach einer bevorzugten Weiterbildung der Erfindung kann wenigstens ein weiterer Kanal zur Aufnahme wenigstens eines zweiten Wuchtgewichts ausgebildet sein. Das zweite Wuchtgewicht kann in Verbindung mit dem ersten Wuchtgewicht eine Unwucht in verbesserter Weise kompensieren. Dabei kann der Abstand jedes Wuchtgewichts zur Rotationsachse unabhängig vom jeweiligen anderen Wuchtgewicht auf einen jeweiligen Zielabstand eingestellt werden. Durch entsprechende Einstellung der Wuchtgewichte kann dabei eine von einer Unwucht erzeugte Kraft (vgl. Formel (1)) nicht nur betragsmäßig, sondern auch richtungsmäßig durch die von den beiden Wuchtgewichten in Kombination bewirkte Kompensationskraft (vgl. Formel (2)) zumindest annähernd kompensiert werden.

Bevorzugt erstrecken sich wenigstens zwei Kanäle in derselben, insbesondere senkrecht zur Rotationsachse verlaufenden, Ebene oder in unterschiedlichen, insbesondere jeweils senkrecht zur Rotationsachse verlaufenden, Ebenen. Die Kanäle können somit bezogen auf die Rotationsachse in unterschiedlichen Höhen oder auf der gleichen Höhe durch den Rotor bzw. die Rotorwelle verlaufen.

Bevorzugt verlaufen wenigstens zwei Kanäle in einem Winkel zueinander. Besonders bevorzugt beträgt der Winkel dabei zumindest annähernd 90 Grad. Ferner ist es besonders bevorzugt, wenn sich die beiden Kanäle kreuzen, insbesondere im Bereich der Rotationsachse. Allerdings können als Sacklöcher ausgebildete Kanäle auch in einem Winkel zueinander angeordnet sein, ohne dass sie sich kreuzen.

Nach einer bevorzugten Weiterbildung der Erfindung können wenigstens zwei insbesondere als Durchgänge ausgebildete Kanäle versetzt zur Rotationsachse verlaufen. Dabei ist es besonders bevorzugt, wenn die wenigstens zwei Kanäle parallel zueinander verlaufen, insbesondere in einer senkrecht zur Rotationsachse verlaufenden Ebene. Dabei kann jeweils wenigstens ein Wuchtgewicht in jedem Kanal auf einen jeweiligen Zielabstand zur Rotationsachse derart eingestellt werden, dass eine in der Ebene auftretende Unwucht nach Betrag und Richtung zumindest annähernd kompensiert wird.

Besonders vorteilhaft ist es, wenn sich zumindest ein Kanal, bevorzugt jeder Kanal, bezogen auf die Rotationsachse in radialer Richtung erstreckt. Ein derartiger Kanal kann besonders einfach in einen Rotor bzw. in eine Rotorwelle eingebracht werden.

Zumindest ein Kanal kann sich in einer Richtung erstrecken, die zu einer bezogen auf die Rotationsachse des Rotors radialen Richtung geneigt ist. Der Kanal verläuft somit nicht senkrecht, sondern schräg zur Rotationsachse. Vorteilhaft daran ist, dass durch geschickte Anordnung eines Wuchtgewichts in dem Kanal auch ein Taumelschlag und/oder eine mögliche Durchbiegung der Rotorwelle beeinflusst werden kann.

Bei der Pumpe handelt es sich bevorzugt um eine Vakuumpumpe und besonders bevorzugt um eine Turbomolekularpumpe.

Die Erfindung betrifft auch ein Verfahren zum Wuchten eines Rotors einer erfindungsgemäßen Pumpe, insbesondere einer Vakuumpumpe, wobei der Rotor einen Einstellbereich für wenigstens ein Wuchtgewicht aufweist, wobei der Abstand des Wuchtgewichts zur Rotationsachse des Rotors in dem Einstellbereich auf einen Zielabstand von einer Mehrzahl von am Rotor vorgesehenen Zielabständen eingestellt wird, wobei der eingestellte Zielabstand einem gewünschten Wuchtzustand entspricht.

Erfindungsgemäß wird, insbesondere bevor das Wuchtgewicht in einem am Rotor vorgesehenen Kanal angeordnet wird, eine Spanneinrichtung, wie etwa eine Feder oder ein Elastomer, in dem Kanal angeordnet, und dann wird das Wuchtgewicht bei der Einstellung des Zielabstands gegen die Spanneinrichtung gedrückt, so dass die Spanneinrichtung bei im Zielabstand lagefixierten Wuchtgewicht eine, insbesondere radial nach außen gerichtete Vorspannkraft auf das Wuchtgewicht ausübt. Nach einer anderen Verfahrensvariante werden zwei Wuchtschrauben in einen am Rotor vorgesehenen Kanal derart eingeschraubt und gegeneinander angezogen, dass das von den Wuchtschrauben gebildete Wuchtgewicht dem Zielabstand entsprechend von der Rotationsachse beabstandet ist.

Nachfolgend wird die Erfindung unter Bezugnahme auf die beigefügten Figuren beispielhaft beschrieben. Es zeigen, jeweils schematisch,

Fig. 1    eine Vakuumpumpe in einer geschnittenen Darstellung,

Fig. 2    eine unterbrochene Schnittdarstellung einer Rotorwelle einer ersten Variante eines Rotors der Pumpe von Fig. 1,

Fig. 3    eine unterbrochene Schnittdarstellung einer Rotorwelle einer zweiten Variante eines Rotors der Pumpe von Fig. 1,

Fig. 4    eine unterbrochene Schnittdarstellung einer Rotorwelle einer dritten Variante eines Rotors der Pumpe von Fig. 1,

Fig. 4A   eine unterbrochene Schnittdarstellung einer Rotorwelle einer gegenüber der dritten Variante abgewandelten Variante eines Rotors der Pumpe von Fig. 1,

Fig. 5    eine unterbrochene Schnittdarstellung einer Rotorwelle einer vierten Variante eines Rotors der Pumpe von Fig. 1,

Fig. 6    eine Schnittdarstellung quer zur Rotationsachse einer Rotorwelle einer fünften Variante eines Rotors der Pumpe von Fig. 1, und

Fig. 7    eine unterbrochene Schnittdarstellung einer Rotorwelle einer sechsten Variante eines Rotors der Pumpe von Fig. 1.

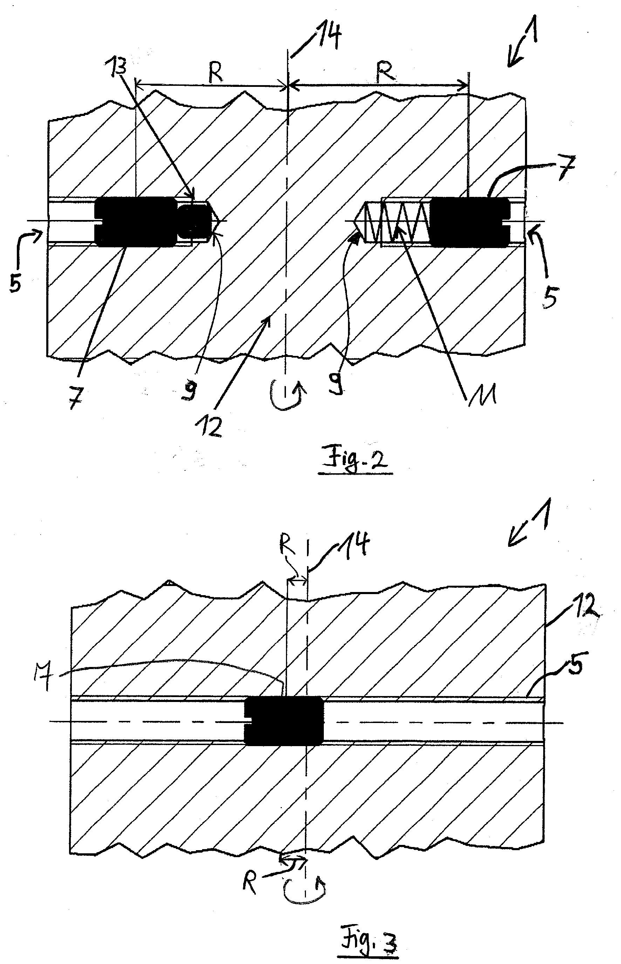

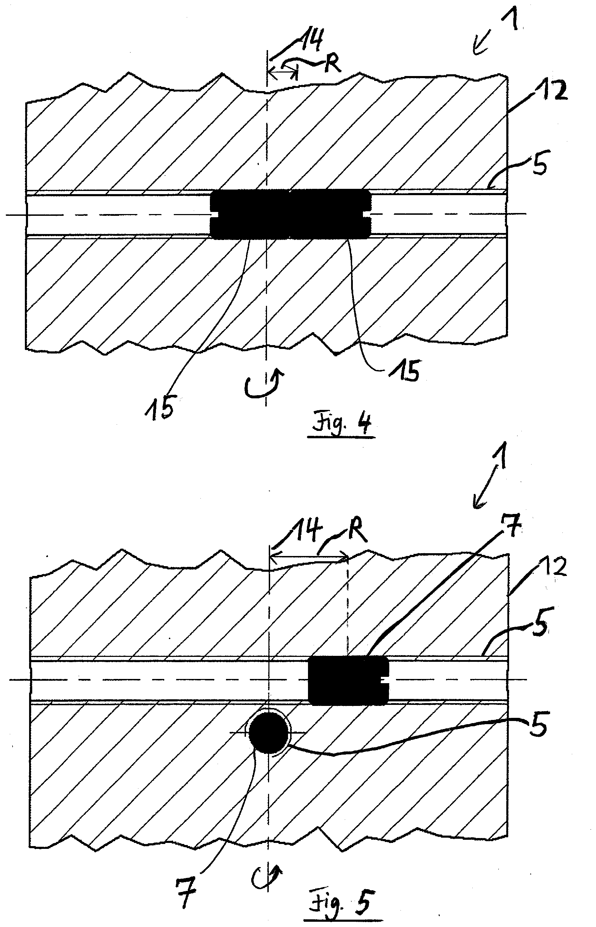

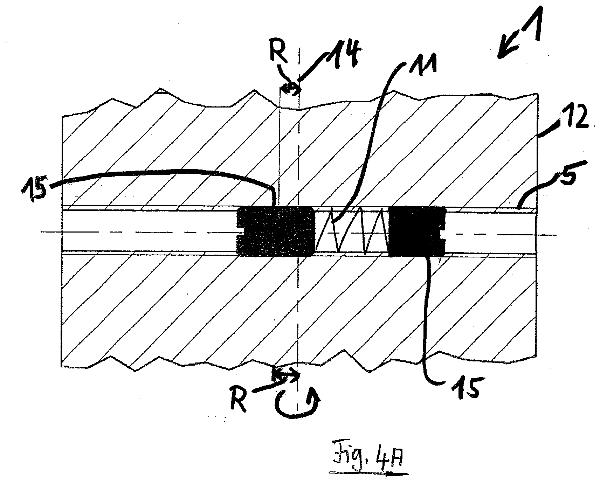

Das elastische Element, das als Spanneinrichtung funktioniert, wird nur in den Figuren 2 und 4a benutzt. Damit sind nur die in den Figuren 2 und 4a gezeigten Varianten Teil der Erfindung.

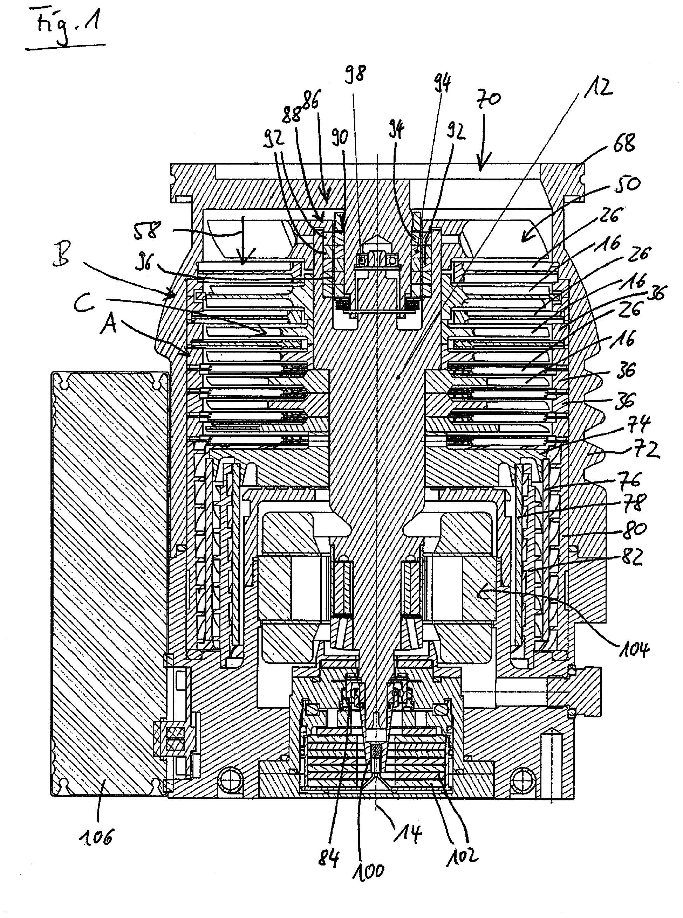

Die in Fig. 1 gezeigte Vakuumpumpe umfasst einen von einem Einlassflansch 68 umgebenen Pumpeneinlass 70 sowie mehrere Pumpstufen zur Förderung des an dem Pumpeneinlass 70 anstehenden Gases zu einem in Fig. 1 nicht dargestellten Pumpenauslass. Die Vakuumpumpe umfasst einen Stator mit einem statischen Gehäuse 72 und einen in dem Gehäuse 72 angeordneten Rotor mit einer um eine Rotationsachse 14 drehbar gelagerten Rotorwelle 12.

Die Vakuumpumpe ist als Turbomolekularpumpe ausgebildet und umfasst mehrere pumpwirksam miteinander in Serie geschaltete turbomolekulare Pumpstufen mit mehreren mit der Rotorwelle 12 verbundenen turbomolekularen Rotorscheiben 16 und mehreren in axialer Richtung zwischen den Rotorscheiben 16 angeordneten und in dem Gehäuse 72 festgelegten turbomolekularen Statorscheiben 26, die durch Distanzringe 36 in einem gewünschten axialen Abstand zueinander gehalten sind. Die Rotorscheiben 16 und Statorscheiben 26 stellen in dem Schöpfbereich 50 eine in Richtung des Pfeils 58 gerichtete axiale Pumpwirkung bereit.

Die Vakuumpumpe umfasst außerdem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 12 verbundene Rotornabe 74 und zwei an der Rotornabe 74 befestigte und von dieser getragene zylindermantelförmige Holweck-Rotorhülsen 76, 78, die koaxial zu der Rotationsachse 14 orientiert und in radialer Richtung ineinander geschachtelt sind. Ferner sind zwei zylindermantelförmige Holweck-Statorhülsen 80, 82 vorgesehen, die ebenfalls koaxial zu der Rotationsachse 14 orientiert und in radialer Richtung ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen jeweils einer Holweck-Rotorhülse 76, 78 und einer Holweck-Statorhülse 80, 82 gebildet. Dabei ist jeweils eine der pumpaktiven Oberflächen glatt ausgebildet - vorliegend diejenige der Holweck-Rotorhülse 76 bzw. 78 - und die gegenüberliegende pumpaktive Oberfläche der Holweck-Statorhülse 80, 82 weist eine Strukturierung mit schraubenlinienförmig um die Rotationsachse 14 herum in axialer Richtung verlaufenden Nuten auf, in denen durch die Rotation des Rotors das Gas vorangetrieben und dadurch gepumpt wird.

Die drehbare Lagerung der Rotorwelle 12 wird durch ein Wälzlager 84 im Bereich des Pumpenauslasses und ein Permanentmagnetlager 86 im Bereich des Pumpeneinlasses 70 bewirkt.

Das Permanentmagnetlager 86 umfasst eine rotorseitige Lagerhälfte 88 und eine statorseitige Lagerhälfte 90, welche jeweils einen Ringstapel aus mehreren in axialer Richtung aufeinandergestapelten permanentmagnetischen Ringen 92, 94 umfassen, wobei sich die Magnetringe 92, 94 unter Ausbildung eines radialen Lagerspalts 96 gegenüberliegen.

Innerhalb des Magnetlagers 86 ist ein Not- bzw. Fanglager 98 vorgesehen, welches als ungeschmiertes Wälzlager ausgebildet ist und im normalen Betrieb der Vakuumpumpe ohne Berührung leer läuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Im Bereich des Wälzlagers 84 ist an der Rotorwelle 12 eine konische Spritzmutter 100 mit einem zu dem Wälzlager 84 hin zunehmenden Außendurchmesser vorgesehen, die mit zumindest einem Abstreifer eines mehrere mit einem Betriebsmittel, wie zum Beispiel einem Schmiermittel, getränkte saugfähige Scheiben 102 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 100 übertragen und infolge der Zentrifugalkraft entlang der Spritzmutter 100 in Richtung des größer werdenden Außendurchmessers der Spritzmutter 100 zu dem Wälzlager 84 hin gefördert, wo es zum Beispiel eine schmierende Funktion erfüllt.

Die Vakuumpumpe umfasst einen Antriebsmotor 104 zum drehenden Antreiben des Rotors, dessen Läufer durch die Rotorwelle 12 gebildet ist. Eine Steuereinheit 106 steuert den Motor 104 an. Die turbomolekularen Pumpstufen stellen in dem Schöpfbereich 50 eine Pumpwirkung in Richtung des Pfeils 58 bereit.

Bei bestimmungsgemäßem Gebrach der Vakuumpumpe von Fig. 1 kann der Rotor mit Umdrehungsgeschwindigkeiten von einigen Tausend oder einigen Zehntausend Umdrehungen pro Minute umlaufen. Daher sollten am Rotor vorhandene Unwuchten soweit wie möglich kompensiert sein, um insbesondere zu vermeiden, dass diese den Pumpenbetrieb stören oder sogar die Pumpe beschädigen.

Bei der Vakuumpumpe weist der Rotor im Bereich der Rotorwelle 12 einen Einstellbereich für wenigstens ein Wuchtgewicht auf, wobei in dem Einstellbereich der Abstand des Wuchtgewichts zur Rotationsachse 14 auf einen Zielabstand eingestellt ist, bei dem das Wuchtgewicht einen gewünschten Wuchtzustand bewirkt (in Fig. 1 nicht dargestellt). Dabei kann der gewünschte Wuchtzustand dem Zustand eines ausgewuchteten Rotors entsprechen.

Nachfolgend werden anhand der Fig. 2 bis 7 unterschiedliche Rotorvarianten mit Wuchtgewichten näher beschrieben.

Bei dem Rotor 1 der Fig. 2 sind an der Rotorwelle 12 zumindest die beiden gezeigten Kanäle 5 in Form von sacklochartigen Gewindebohrungen ausgebildet, die in radialer Richtung zur Rotationsachse 14 verlaufen. Dabei ist in jeden Kanal 5 jeweils ein als Wuchtschraube ausgebildetes Wuchtgewicht 7 eingeschraubt. In jedem Kanal 5 ist ein Einstellbereich vorgesehen, der sich im Wesentlichen über die gesamte Kanaltiefe erstreckt und innerhalb dem das jeweilige Wuchtgewicht 7 auf einen Zielabstand R zur Rotationsachse 14 eingestellt werden kann, bei dem ein gewünschter Wuchtzustand bewirkt wird.

Bei der in Fig. 2 dargestellten Variante bewirken die beiden Wuchtgewichte 7 einander entgegengerichtete Kompensationskräfte, da die Wuchtgewichte 7 bezogen auf die Rotationsachse 14 auf einander gegenüberliegenden Seiten angeordnet sind. Der gewünschte Wuchtzustand wird somit durch die resultierende Kompensationskraft bewirkt, die eine entgegengerichtete und betragsmäßig gleiche durch eine Unwucht hervorgerufene Kraft kompensieren kann.

Wie die Fig. 2 zeigt, sind die bei ihrem jeweiligen Zielabstand R angeordneten Wuchtgewichte 7 nicht bis auf den jeweiligen Boden 9 des jeweiligen Kanals 5 eingeschraubt. Im rechtsseitigen Kanal 5 ist vielmehr zwischen dem Wuchtgewicht 7 und dem Kanalboden 9 eine Spanneinrichtung in Form einer Feder 11 angeordnet, die auf das Wuchtgewicht 5 eine radial nach außen gerichtete Vorspannkraft ausübt, die das Wuchtgewicht 5 bei dem eingestellten Zielabstand R fixiert. Im linksseitigen Kanal 5 ist zwischen dem Wuchtgewicht 7 und dem Kanalboden 9 dagegen eine Spanneinrichtung in Form eines Elastomers 13 angeordnet, das auf das Wuchtgewicht 7 ebenfalls eine radial nach außen gerichtete Vorspannkraft ausübt, die das Wuchtgewicht 7 bei dem eingestellten Zielabstand R ebenfalls fixiert.

Bei der in Fig. 3 dargestellten Variante ist wenigstens ein Kanal 5 in der Rotorwelle 12 des Rotors 1 als durchgehende Gewindebohrung ausgebildet. In dem Kanal 5 ist ein Wuchtgewicht 7 auf einen Zielabstand R zur Rotationsachse eingestellt ist, wodurch ein bestimmter Wuchtzustand erreicht wird. Insbesondere bewirkt das Wuchtgewicht 7 bei sich um die Rotationsachse 14 drehendem Rotor 1 gemäß Formel (2) eine vom Zielabstand abhängige Kompensationskraft, die bezogen auf die Fig. 3 nach links gerichtet ist, so dass durch das auf den Zielabstand R eingestellte Wuchtgewicht 7 eine bezogen auf die Fig. 3 nach rechts gerichtete betragsmäßig gleiche Kraft, die durch eine Unwucht hervorgerufenen wird, kompensiert werden kann.

Vorteilhaft an dem die Rotationsachse 14 kreuzenden Kanal 5 ist, dass das Wuchtgewicht 7 auch auf einen sehr kleinen Zielabstand eingestellt werden kann, so dass auch betragsmäßig kleine Unwuchten korrigiert werden können. Dabei kann das Wuchtgewicht 7 zum Beispiel mit einem Klebstoff (nicht dargestellt) in die Durchgangsbohrung 5 eingeklebt sein, um es bei dem eingestellten Zielabstand R zu fixieren.

Bei der in Fig. 4 gezeigten Rotorwelle 12 des Rotors 1 ist ein als durchgehende Gewindebohrung ausgebildeter Kanal 5 vorgesehen, in welchen zwei Wuchtschrauben 15 von jeweils einer Seite her derart eingeschraubt und unmittelbar gegeneinander angezogen sind, dass das von ihnen gebildete Wuchtgewicht in einem bestimmten Zielabstand R von der Rotationsachse 14 beabstandet ist und somit einen gewünschten Wuchtzustand bewirkt. Das Gegeneinanderanziehen der beiden Wuchtschrauben 15 bewirkt ein Verspannen im Gewinde, wodurch die beiden Wuchtschrauben 15 in ihrem jeweiligen Zielabstand sicher fixiert werden.

Im Unterschied zur Fig. 4 ist bei der in Fig. 4A gezeigten Rotorwelle 12 des Rotors 1 zwischen den beiden Wuchtschrauben 15 eine Feder 11 angeordnet, gegen die die beiden Wuchtschrauben 15 angezogen sind. Die Feder 11 drückt dabei gegen die Wuchtschrauben 15 und bewirkt ein Verspannen der Wuchtschrauben 15 gegen das Gewinde der Gewindebohrung. Dadurch werden die Wuchtschrauben 15 in ihrem jeweiligen Zielabstand sicher fixiert.

Bei der in Fig. 5 gezeigten Rotorwelle 12 des Rotors 1 sind zwei als durchgehende Gewindebohrungen ausgebildete Kanäle 5 vorgesehen, die in unterschiedlichen, sich senkrecht zur Rotationsachse 14 erstreckenden Ebenen in einem Winkel von 90 Grad relativ zueinander verlaufen. In jeden Kanal 5 ist jeweils ein Wuchtgewicht 7 eingeschraubt und jedes Wuchtgewicht 7 ist dabei bei einem jeweiligen eingestellten Zielabstand fixiert, sodass die beiden Wuchtgewichte 7 einen gewünschten Wuchtzustand bewirken.

Insbesondere können die beiden Wuchtgewichte 7 so eingestellt sein, dass eine Unwucht kompensiert wird. Aufgrund der Ausrichtung der beiden Kanäle 5 orthogonal zueinander können die Wuchtgewichte 7 in orthogonalen Richtungen verstellt werden, so dass nicht nur der Betrag, sondern auch die Richtung einer resultierenden Kompensationskraft, die die Wuchtgewichte 7 bewirken, verändert werden kann. Dadurch ist es möglich, dass bei entsprechender Auswahl und Anordnung der beiden Wuchtgewichte 7 in den Kanälen 5 eine in einer beliebigen radialen Richtung wirkende Unwucht zumindest annähernd kompensiert werden kann.

Im Unterschied zu der Variante der Fig. 5 können die beiden Kanäle 5 auch in derselben Ebene verlaufen und sich, insbesondere im Bereich der Rotationsachse 14, kreuzen (nicht gezeigt). Durch die Anordnung von sich nicht kreuzenden Kanälen wie bei der Variante der Fig. 5 können jedoch mögliche Probleme im Zusammenhang mit einer Gratbildung an den Kreuzungspunkten vermieden werden.

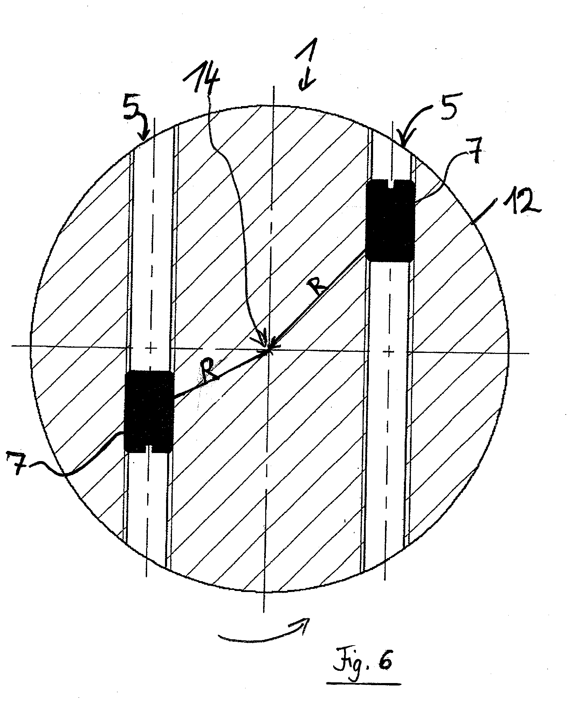

Bei der in Fig. 6 gezeigten Rotorwelle 12 sind zwei durchgehende und parallel zueinander verlaufende Gewindebohrungen 5 vorgesehen, in die jeweils ein Wuchtgewicht 7 eingeschraubt ist. Dabei sind die Wuchtgewichte 7 in einem jeweiligen Zielabstand R zur Rotationsachse 14 derart angeordnet, dass sie in Kombination einen gewünschten Wuchtzustand bewirken, durch den insbesondere eine in der Ebene der Wuchtgewichte 7 auftretende Unwucht zumindest annähernd kompensiert werden kann.

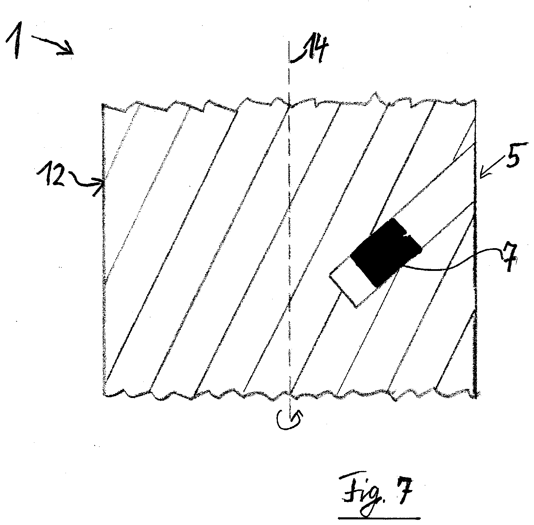

Bei den Varianten der Fig. 2 bis 6 sind die Kanäle 5 jeweils senkrecht zur Rotationsachse 14 in die jeweilige Rotorwelle 12 eingebracht. Demgegenüber verläuft der Kanal 5 in der Rotorwelle 12 bei der Variante der Fig. 7 schräg zur Rotationsachse 14. Mit anderen Worten gesagt verläuft der Kanal 5 in einer Richtung, die zu einer bezogen auf die Rotationsachse 14 radialen Richtung geneigt ist. An dem Kanal 5 ist vorteilhaft, dass durch Einschrauben eines Wuchtgewichts 7 bis zu einer bestimmten Tiefe in den Kanal 5, also durch Einstellen des Wuchtgewichts 7 auf einen bestimmten Abstand zur Rotationsachse 14 auch ein Taumelschlag des Rotors 1 und/oder eine mögliche Durchbiegung der Rotorwelle 12 beeinflusst werden kann.

Die vorstehend beschriebenen Varianten sind nur als Beispiele gedacht. Bei einer anderen nicht dargestellten Variante können in der Rotorwelle mehrere in Umfangsrichtung der Rotorwelle regelmäßig voneinander beabstandete, radial verlaufende Kanäle vorgesehen sein, in die jeweils wenigstens ein Wuchtgewicht eingebracht und auf einen jeweiligen Zielabstand eingestellt sein kann. Außerdem können wenigstens zwei Kanäle bezogen auf die Längsrichtung der Rotorwelle versetzt zueinander verlaufen.

Die Wuchtbohrungen bzw. Kanäle 5 zur Aufnahme von Wuchtgewichten 7, 15 können in beliebigen Ebenen längs der Rotationsachse 14 im Bereich zwischen dem Wälzlager 84 und dem Permanentmagnetlager 86 im Rotor 1 vorgesehen sein. Die Kanäle 5 müssen also nicht alle in derselben Ebene verlaufen, sondern verschiedene Kanäle 5 können im Bereich zwischen dem Wälzlager 84 und dem Permanentmagnetlager 86 in verschiedenen, insbesondere senkrecht zur Rotationsachse 14 ausgerichteten, Ebenen im Rotor 1 verlaufen.

Bezugszeichenliste

| | |
|---|---|
| 1 | Rotor |
| 5 | Kanal |
| 7 | Wuchtgewicht |
| 9 | Kanalboden |
| 11 | Feder |
| 12 | Rotorwelle |
| 13 | Elastomer |
| 14 | Rotationsachse |
| 15 | Wuchtschraube |
| 16 | Rotorscheibe |
| 26 | Statorscheibe |
| 36 | Distanzring |
| 50 | Schöpfbereich |
| 58 | Pfeil |
| 68 | Einlassflansch |
| 70 | Pumpeneinlass |
| 72 | Gehäuse |
| 74 | Rotornabe |
| 76, 78 | Holweck-Rotorhülse |
| 80,82 | Holweck-Statorhülse |
| 84 | Wälzlager |
| 86 | Permanentmagnetlager |
| 88 | rotorseitige Lagerhälfte |
| 90 | statorseitige Lagerhälfte |
| 92, 94 | permanentmagnetischer Ring |
| 96 | radialer Lagerspalt |
| 98 | Fanglager |
| 100 | Spritzmutter |
| 102 | saugfähige Scheibe |
| 104 | Antriebsmotor |
| 106 | Steuereinheit |
| R | Zielabstand |

**Patentansprüche**

1. Pumpe, insbesondere Vakuumpumpe, umfassend einen um eine Rotationsachse (14) drehbaren Rotor (1), der einen Einstellbereich für wenigstens ein Wuchtgewicht (7) aufweist, wobei in dem Einstellbereich der Abstand des Wuchtgewichts (7) zur Rotationsachse (14) auf einen Zielabstand (R) von einer Mehrzahl von am Rotor (1) vorgesehenen Zielabständen eingestellt ist, und wobei das Wuchtgewicht (7) bei dem eingestellten Zielabstand einen gewünschten Wuchtzustand bewirkt; wobei wenigstens ein Kanal (5) in dem Rotor (1) ausgebildet ist, wobei das Wuchtgewicht (7) in dem Kanal (5) angeordnet ist und sich der Einstellbereich über zumindest einen Teil des Kanals (5) erstreckt; und wobei eine Spanneinrichtung (11, 13) in dem Kanal (5) angeordnet ist;
**dadurch gekennzeichnet,**
**dass** die Spanneinrichtung (11, 13) ein elastisches Element wie etwa eine Feder oder ein Elastomer ist.

2. Pumpe nach Anspruch 1,
**dadurch gekennzeichnet, dass**
das Wuchtgewicht (7) bei dem Zielabstand (R) am Rotor (1), insbesondere an einer Rotorwelle (12), mittels einer Fixierung fixiert ist, insbesondere durch Festkleben oder Verspannen.

3. Pumpe nach Anspruch 1 oder 2,
**dadurch gekennzeichnet, dass**
der Kanal (5) in der Rotorwelle (12) oder in einem Bauteil auf der Rotorwelle (12), ausgebildet ist.

4. Pumpe nach Anspruch 3,
**dadurch gekennzeichnet, dass**
der Kanal (5) als Gewindebohrung und das Wuchtgewicht (7) als wenigstens eine in der Gewindebohrung angeordnete Gewindeschraube ausgebildet sind.

5. Pumpe nach Anspruch 3 oder 4,
**dadurch gekennzeichnet, dass**
der Kanal (5) als Sackloch oder als Durchgang ausgebildet ist.

6. Pumpe nach Anspruch 5,
**dadurch gekennzeichnet, dass**
bei dem eingestellten Zielabstand (R) das Wuchtgewicht (7) von einem Boden (9) des als Sackloch ausgebildeten Kanals (5) beabstandet ist.

7. Pumpe nach zumindest einem der Ansprüche 3 bis 6,
**dadurch gekennzeichnet, dass**
wenigstens zwei Wuchtschrauben (15) in den Kanal (5) derart eingeschraubt und unmittelbar oder mittelbar gegeneinander angezogen sind, dass das von den Wuchtschrauben (15) gebildete Wuchtgewicht dem Zielabstand (R) entsprechend von der Rotationsachse (14) beabstandet ist, wobei ein elastisches Element, insbesondere eine Feder (11), zwischen den beiden Wuchtschrauben (15) angeordnet ist.

8. Pumpe nach zumindest einem der Ansprüche 3 bis 7,
**dadurch gekennzeichnet, dass**
wenigstens ein weiterer Kanal (5) zur Aufnahme wenigstens eines zweiten Wuchtgewichts (7) ausgebildet ist.

9. Pumpe nach zumindest einem der Ansprüche 3 bis 8,
**dadurch gekennzeichnet, dass**

wenigstens zwei Kanäle (5) in derselben, insbesondere senkrecht zur Rotationsachse (14) verlaufenden, Ebene oder in unterschiedlichen, insbesondere jeweils senkrecht zur Rotationsachse (14) verlaufenden, Ebenen verlaufen.

10. Pumpe nach zumindest einem der Ansprüche 3 bis 9,
**dadurch gekennzeichnet, dass**
wenigstens zwei Kanäle (5) in einem Winkel, vorzugsweise von zumindest annähernd 90 Grad, zueinander verlaufen,
wobei, bevorzugt, sich die beiden Kanäle (5) kreuzen, insbesondere im Bereich der Rotationsachse (A).

11. Pumpe nach zumindest einem der Ansprüche 3 bis 10,
**dadurch gekennzeichnet, dass**
wenigstens zwei Kanäle (5) parallel zueinander verlaufen.

12. Pumpe nach zumindest einem der Ansprüche 3 bis 11,
**dadurch gekennzeichnet, dass**
sich zumindest ein Kanal (5), bevorzugt jeder Kanal, bezogen auf die Rotationsachse (14) in radialer Richtung erstreckt.

13. Pumpe nach zumindest einem der Ansprüche 3 bis 12,
**dadurch gekennzeichnet, dass**
sich zumindest ein Kanal (5) in einer Richtung erstreckt, die zu einer bezogen auf die Rotationsachse (14) radialen Richtung geneigt ist.

14. Verfahren zum Wuchten eines Rotors (1) einer Pumpe, insbesondere einer Vakuumpumpe, nach wenigstens einem der vorhergehenden Ansprüche, wobei der Rotor (1) einen Einstellbereich für wenigstens ein Wuchtgewicht (7) aufweist, wobei in dem Einstellbereich der Abstand des Wuchtgewichts (7) zur Rotationsachse (14) des Rotors (1) auf einen Zielabstand (R) von einer Mehrzahl von am Rotor (1) vorgesehenen Zielabständen eingestellt wird, wobei der eingestellte Zielabstand (R) einem gewünschten Wuchtzustand entspricht.

**Claims**

1. A pump, in particular a vacuum pump, comprising a rotor (1) which is rotatable about an axis of rotation (14) and which has a setting region for at least one balancing weight (7), wherein, in the setting region, the spacing of the balancing weight (7) from the axis of rotation (14) is set to a target spacing (R) of a plurality of target spacings provided at the rotor (1), and wherein the balancing weight (7) brings about a desired balancing state at the set target spacing;
wherein at least one channel (5) is formed in the rotor (1), with the balancing weight (7) being arranged in the channel (5) and the setting region extending over at least a part of the channel (5); and
wherein a tensioning device (11, 13) is arranged in the channel (5), **characterized in that**
the tensioning device (11, 13) is an elastic element such as a spring or an elastomer.

2. A pump in accordance with claim 1,
**characterized in that**
the balancing weight (7) is fixed at the target spacing (R) to the rotor (1), in particular to a rotor shaft (12), by means of a fixing, in particular by adhesive bonding or clamping.

3. A pump in accordance with claim 1 or claim 2,
**characterized in that**
the channel (5) is formed in the rotor shaft (12) or in a component on the rotor shaft (12).

4. A pump in accordance with claim 3,
**characterized in that**
the channel (5) is configured as a threaded bore and the balancing weight (7) is configured as at least one threaded screw arranged in the threaded bore.

5. A pump in accordance with claim 3 or claim 4,
**characterized in that**
the channel (5) is configured as a blind hole or as a passage.

6. A pump in accordance with claim 5,
**characterized in that**,
at the set target spacing (R), the balancing weight (7) is spaced apart from a base (9) of the channel (5) configured as a blind hole.

7. A pump in accordance with at least one of the claims 3 to 6,
**characterized in that**
at least two balancing screws (15) are screwed into the channel (5) and are directly or indirectly tightened with respect to one another in such a manner that the balancing weight formed by the balancing screws (15) is spaced apart from the axis of rotation (14) in accordance with the target spacing (R), with an elastic element, in particular a spring (11), being arranged between the two balancing screws (15).

8. A pump in accordance with at least one of the claims 3 to 7,
**characterized in that**
at least one further channel (5) is configured to receive at least one second balancing weight (7).

**9.** A pump in accordance with at least one of the claims 3 to 8, **characterized in that** at least two channels (5) extend in the same plane, which in particular extends perpendicular to the axis of rotation (14), or in different planes which in particular each extend perpendicular to the axis of rotation (14).

**10.** A pump in accordance with at least one of the claims 3 to 9, **characterized in that** at least two channels (5) extend at an angle, preferably of at least approximately 90 degrees, to one another, with, preferably, the two channels (5) intersecting, in particular in the region of the axis of rotation (A).

**11.** A pump in accordance with at least one of the claims 3 to 10, **characterized in that** at least two channels (5) extend in parallel with one another.

**12.** A pump in accordance with at least one of the claims 3 to 11, **characterized in that** at least one channel (5), preferably each channel, extends in a radial direction with respect to the axis of rotation (14).

**13.** A pump in accordance with at least one of the claims 3 to 12, **characterized in that** at least one channel (5) extends in a direction which is inclined with respect to a direction which is a radial direction with respect to the axis of rotation (14).

**14.** A method of balancing a rotor (1) of a pump, in particular of a vacuum pump, in accordance with at least one of the preceding claims, wherein the rotor (1) has a setting region for at least one balancing weight (7), wherein, in the setting region, the spacing of the balancing weight (7) from the axis of rotation (14) of the rotor (1) is set to a target spacing (R) of a plurality of target spacings provided at the rotor (1), with the set target spacing (R) corresponding to a desired balancing state.

**Revendications**

**1.** Pompe, en particulier pompe à vide, comportant un rotor (1) pouvant tourner autour d'un axe de rotation (14) et présentant une zone de réglage pour au moins un poids d'équilibrage (7), la distance du poids d'équilibrage (7) par rapport à l'axe de rotation (14) étant réglée dans la zone de réglage à une distance cible (R) parmi plusieurs distances cibles prévues au niveau du rotor (1), et le poids d'équilibrage (7) procurant un état d'équilibrage souhaité à la distance cible réglée ; dans laquelle au moins un canal (5) est formé dans le rotor (1), le poids d'équilibrage (7) est disposé dans le canal (5), et la zone de réglage s'étend sur une partie au moins dudit canal (5) ; et un moyen de serrage (11, 13) est disposé dans le canal (5) ; **caractérisée en ce que** le moyen de serrage (11, 13) est un élément élastique tel qu'un ressort ou un élastomère.

**2.** Pompe selon la revendication 1, **caractérisée en ce que** le poids d'équilibrage (7) est fixé à la distance cible (R) sur le rotor (1), en particulier sur un arbre de rotor (12), à l'aide d'une fixation, en particulier par collage ou par serrage.

**3.** Pompe selon la revendication 1 ou 2, **caractérisée en ce que** le canal (5) est réalisé dans l'arbre de rotor (12) ou dans un composant sur l'arbre de rotor (12).

**4.** Pompe selon la revendication 3, **caractérisée en ce que** le canal (5) est réalisé sous la forme d'un alésage taraudé et le poids d'équilibrage (7) est réalisé sous la forme d'au moins une vis filetée disposée dans l'alésage taraudé.

**5.** Pompe selon la revendication 3 ou 4, **caractérisée en ce que** le canal (5) est réalisé en forme de trou borgne ou en forme de un passage.

**6.** Pompe selon la revendication 5, **caractérisée en ce que** la distance cible (R) étant réglée, le poids d'équilibrage (7) est espacé d'un fond (9) du canal (5) réalisé en forme de trou borgne.

**7.** Pompe selon l'une au moins des revendications 3 à 6, **caractérisée en ce que** au moins deux vis d'équilibrage (15) sont vissées dans le canal (5) et serrées directement ou indirectement l'une contre l'autre de telle sorte que le poids d'équilibrage formé par les vis d'équilibrage (15) est espacé de l'axe de rotation (14) conformément à la distance cible (R), un élément élastique, en particulier un ressort (11), étant disposé entre les deux vis d'équilibrage (15).

**8.** Pompe selon l'une au moins des revendications 3 à 7,
**caractérisée en ce que**
au moins un autre canal (5) est formé pour recevoir au moins un deuxième poids d'équilibrage (7).

9. Pompe selon l'une au moins des revendications 3 à 8,
**caractérisée en ce que**
au moins deux canaux (5) s'étendent dans le même plan en particulier perpendiculaire à l'axe de rotation (14), ou dans des plans différents s'étendant chacun en particulier perpendiculairement à l'axe de rotation (14).

10. Pompe selon l'une au moins des revendications 3 à 9,
**caractérisée en ce que**
au moins deux canaux (5) s'étendent sous un angle, de préférence d'au moins environ 90 degrés, l'un par rapport à l'autre,
de préférence, les deux canaux (5) se croisant en particulier au niveau de l'axe de rotation (A).

11. Pompe selon l'une au moins des revendications 3 à 10,
**caractérisée en ce que**
au moins deux canaux (5) s'étendent parallèlement l'un à l'autre.

12. Pompe selon l'une au moins des revendications 3 à 11,
**caractérisée en ce que**
au moins un canal (5), de préférence chaque canal, s'étend en direction radiale par rapport à l'axe de rotation (14).

13. Pompe selon l'une au moins des revendications 3 à 12,
**caractérisée en ce que**
au moins un canal (5) s'étend dans une direction qui est inclinée par rapport à une direction radiale par rapport à l'axe de rotation (14).

14. Procédé d'équilibrage d'un rotor (1) d'une pompe, en particulier d'une pompe à vide, selon l'une au moins des revendications précédentes, le rotor (1) présentant une zone de réglage pour au moins un poids d'équilibrage (7), la distance du poids d'équilibrage (7) par rapport à l'axe de rotation (14) du rotor (1) étant réglée dans la zone de réglage à une distance cible (R) parmi plusieurs distances cibles prévues au niveau du rotor (1), la distance cible (R) réglée correspondant à un état d'équilibrage souhaité.

Fig. 1

Fig. 2

Fig. 3

Fig. 4

Fig. 5

Fig. 6

*Fig. 7*

Fig. 4A

**EP 2 881 591 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4721445 A1
- EP 1314891 A1